# EUROPEAN PATENT APPLICATION

(11) **EP 4 726 426 A1**
(43) Date of publication of application: **15.04.2026**
(21) Application number: 23943815.3
(22) Date of filing: 28.06.2023
(51) Int. Cl.: G01S 5/02, H04W 64/00, H04W 4/02

(54) **METHOD AND DEVICE FOR RANGING USING ULTRA WIDE BAND COMMUNICATION**

(71) Applicant: Samsung Electronics Co., Ltd., Suwon-si, Gyeonggi-do 16677 (KR)
(72) Inventor: CHOI, Junyoung, Suwon-si, Gyeonggi-do 16677 (KR); KOO, Jonghoe, Suwon-si, Gyeonggi-do 16677 (KR); LIM, Yeonju, Suwon-si, Gyeonggi-do 16677 (KR)
(74) Representative: HGF
(86) International application number: PCT/KR2023/009063
(87) International publication number: WO 2025/005322

(57) **Abstract**

The present disclosure discloses a method for providing a service by using ultra wide band (UWB) communication. The method for a first UWB device, according to an embodiment of the present disclosure, comprises the steps of: receiving a downlink time difference of arrival (DL-TDoA) message from at least one UWB anchor over a UWB channel; confirming that location measurement of the first UWB device based on the DL-TDoA message has failed; receiving, from a second UWB device, a ranging message including location information regarding the second UWB device; and measuring a location of the first UWB device on the basis of the DL-TDoA message and the location information regarding the second UWB device.

## Description

### [Technical Field]

The disclosure relates to UWB communication, and more particularly, to a method for performing ranging between devices using UWB communication.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create a new value in human life. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Invention]

### [Technical Problem]

The disclosure presents a method for reducing the number of message exchanges when each of a plurality of UWB devices performs UWB ranging.

### [Technical Solution]

A method of a first ultra wide band (UWB) device according to an embodiment of the disclosure may include transmitting a first message (GRIM) for initiating group ranging to a second UWB device and a third UWB device, receiving a second message (GRRM) responding to the first message from the second UWB device, receiving a third message (GRRM) responding to the first message from the third UWB device, and transmitting a fourth message (GRFM) including a first reply time determined based on the first message and the second message, and a second reply time determined based on the first message and the third message to the second UWB device and the third UWB device.

A method of a second ultra wide band (UWB) device according to an embodiment of the disclosure may include receiving a first message (GRIM) for initiating group ranging from a first UWB device, transmitting a second message (GRRM) responding to the first message to the first UWB device, receiving (overhearing) a third message (GRRM) transmitted by a third UWB device to the first UWB device in response to the first message from the third UWB device, and receiving a fourth message (GRFM) including a first reply time determined based on the first message and the second message, and a second reply time determined based on the first message and the third message from the first UWB device.

A first ultra wide band (UWB) device according to an embodiment of the disclosure includes a transceiver, and a controller. The controller may be configured to control to transmit a first message (GRIM) for initiating group ranging to a second UWB device and a third UWB device, receive a second message (GRRM) responding to the first message from the second UWB device, receive a third message (GRRM) responding to the first message from the third UWB device, and control to transmit a fourth message (GRFM) including a first reply time determined based on the first message and the second message, and a second reply time determined based on the first message and the third message to the second UWB device and the third UWB device.

A second ultra wide band (UWB) device according to an embodiment of the disclosure includes a transceiver and a controller. The controller may be configured to receive a first message (GRIM) for initiating group ranging from a first UWB device, control to transmit a second message (GRRM) responding to the first message to the first UWB device, receive (overhear) a third message (GRRM) transmitted by a third UWB device to the first UWB device in response to the first message from the third UWB device, and receive a fourth message (GRFM) including a first reply time determined based on the first message and the second message, and a second reply time determined based on the first message and the third message from the first UWB device.

### [Advantageous Effects]

A method and a device according to an embodiment of the disclosure may support efficient group ranging between a plurality of UWB devices.

A method and a device according to an embodiment of the disclosure may reduce the number of ranging message exchanges through group ranging between a plurality of UWB devices.

### [Brief Description of Drawings]

FIG. 1 illustrates an example architecture of a UWB device according to an embodiment of the disclosure.
FIG. 2 illustrates an example configuration of a framework of a UWB device according to an embodiment of the disclosure.
FIG. 3A illustrates an example of a ranging block structure according to an embodiment of the disclosure.
FIG. 3B illustrates a structure of a ranging round according to an embodiment of the disclosure.
FIG. 4 illustrates various examples of a UWB ranging method according to an embodiment of the disclosure.
FIG. 5A illustrates a method for a UWB device to perform UWB ranging in a DL-TDoA scheme according to an embodiment of the disclosure.
FIG. 5B illustrates an example of a ranging block structure for a downlink TDoA scheme according to an embodiment of the disclosure.
FIG. 6A is a view illustrating ranging between devices according to an embodiment of the disclosure.
FIG. 6B is a view illustrating a ranging procedure of a transmitting device according to an embodiment of the disclosure.
FIG. 6C is a view illustrating a ranging procedure of a receiving device according to an embodiment of the disclosure.
FIG. 7 illustrates an example of group ranging-based message exchange according to an embodiment of the disclosure.
FIG. 8 is a flowchart illustrating a group ranging operation according to an embodiment of the disclosure.
FIG. 9 illustrates an example of group ranging-based message exchange according to an embodiment of the disclosure.
FIG. 10 illustrates an example of group ranging-based message exchange according to an embodiment of the disclosure.
FIG. 11A illustrates an example illustrating an initial period during group ranging-based message exchange according to an embodiment of the disclosure.
FIG. 11B illustrates an example illustrating a final period during group ranging-based message exchange according to an embodiment of the disclosure.
FIG. 12A illustrates an example illustrating an initial sharing procedure based on ranging according to an embodiment of the disclosure.
FIG. 12B illustrates an example illustrating a resharing procedure based on ranging according to an embodiment of the disclosure.
FIG. 13A illustrates an example of distance measurement and device display at a first transmitting device according to an embodiment of the disclosure.
FIG. 13B illustrates an example of distance measurement and device display at a second transmitting device according to an embodiment of the disclosure.
FIG. 14 is a flowchart illustrating an initial sharing procedure according to an embodiment of the disclosure.
FIG. 15 is a flowchart illustrating a resharing procedure according to an embodiment of the disclosure.
FIG. 16A illustrates an example in which a device configuration within a group is changed according to an embodiment of the disclosure.
FIG. 16B illustrates an example of distance measurement and device display at a first transmitting device according to an embodiment of the disclosure.
FIG. 16C illustrates an example of distance measurement and device display at a second transmitting device according to an embodiment of the disclosure.
FIG. 17 is a flowchart illustrating an initial sharing procedure according to an embodiment of the disclosure.
FIG. 18 is a flowchart illustrating a resharing procedure according to an embodiment of the disclosure.
FIG. 19 illustrates a structure of a first UWB device according to an embodiment of the disclosure.
FIG. 20 illustrates a structure of a second UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages). The controller may define and control ranging features by transmitting a control message.

"Controlee" may be a ranging device using a ranging parameter in the RCM (or control message) received from the controller. The controlee may use the same ranging features as those configured through control messages from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. The applet may be a FiRa applet.

"Ranging device" may be a device capable of performing UWB ranging. In the disclosure, the ranging device may be an enhanced ranging device (ERDEV) defined in IEEE 802.15.4z or a FiRa Device. The ranging device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. "UWB-enabled Application" may be abbreviated as an application or a UWB application. UWB-enabled Application may be a FiRa-enabled Application.

"Framework" may be a component that provides access to Profiles, individual-UWB configuration and/or notifications. "Framework" may be, e.g., a collection of logical software components including Profile Manager, OOB Connector, Secure Service, and/or UWB service. The framework may be a FiRa framework.

"OOB Connector" may be a software component for establishing an out-of-band (OOB) connection (e.g., BLE connection) between Ranging Devices. The OOB connector may be a FiRa OOB connector.

"Profile" may be a previously defined set of UWB and OOB configuration parameters. The profile may be a FiRa profile.

"Profile Manager" may be a software component that implements a profile available on the Ranging Device. The profile manager may be a FiRa profile manager.

"Service" may be an implementation of a use case that provides a service to an end-user.

"Smart Ranging Device" may be a ranging device that may implement an optional Framework API. The smart ranging device may be a FiRa smart device.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange. The initiator may initiate a ranging exchange by transmitting a first RFRAME (ranging exchange message).

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange. The responder may respond to the ranging exchange message received from the initiator.

"STS" may be a ciphered sequence for increasing the integrity and accuracy of ranging measurement timestamps. The STS may be generated from the ranging session key.

"Secure Channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controlee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controlee.

"UWB session key" may be a key used to protect the UWB Session. The UWB Session Key may be used to generate the STS. The UWB session key may be a UWB ranging session key (URSK), and may be abbreviated as a session key.

"UWB Subsystem (UWBS)" may be a hardware component implementing the UWB PHY and MAC layers specifications. UWBS may have an interface to Framework and an interface to Secure Component to search for RDS.

"UWB message" may be a message including a payload information element (IE) transmitted by the UWB device (e.g., ERDEV).

"Payload IE" may be an IE included in the MAC payload of the UWB MAC frame. The MAC payload may include one or more payload IEs.

"Scheduling-based ranging" may be used for the ranging round scheduled by the controller for the controlees to transmit ranging frames (RFRAMEs) and/or measurement reports in different ranging slots. Scheduling-based ranging may be referred to as time-scheduled ranging. A scheduling mode in which scheduling-based ranging is used may be referred to as a time-scheduled mode.

"Contention-based ranging" may be used when the controller does not know the MAC addresses of controlees participating in the UWB session (ranging session). In contention-based ranging, the controller may be an initiator and may perform ranging with other unknown UWB devices. The scheduling mode in which contention-based ranging is used may be referred to as a contention-based mode.

The contention-based ranging may be used for the ranging round in which the controller determines the size of the contention access period and indicates the CAP size through a ranging control message. The CAP may be referred to as a contention window or a contention window period.

In the contention-based mode, the UWB device may operate as a controller and an initiator, and in this case, the ranging control phase (RCP) and the ranging initiation phase (RIP) may be merged into one phase (e.g., RIP). In the ranging phase (RP), the allocation of the CAP size may determine the CAP period for the responder(s) participating in the corresponding ranging round in units of ranging slots. Each responder may randomly determine one slot in the CAP to transmit a ranging response message (RRM). Messages used in contention-based ranging may use SP1 as an RFRAME configuration.

"Hybrid ranging" may be used when there is a known controlee and an unknown controlee. As described above, the known controlee may be a controlee whose MAC address is known to the controller, and the unknown controlee may be a controlee whose MAC address is not known to the controller. In this disclosure, hybrid ranging may be referred to as hybrid-based ranging. The scheduling mode in which hybrid ranging is used may be referred to as a hybrid-based mode.

In the hybrid-based mode, the controller may perform ranging with the known controlee in the scheduling-based mode and with the unknown controlee in the contention-based mode.

In the hybrid-based mode, the ranging round may include a ranging control phase RCP and a ranging phase RP. The RP may include a contention free period for scheduling-based ranging (access) and a contention access period (CAP) for contention-based ranging (access). The control message (ranging control message) used in the RCP of the hybrid-based mode may be referred to as a ranging management message (RMM).

"Downlink Time Difference of Arrival (DL-TDoA, DT)" may be a positioning method for one or more tag devices (DT-Tag) to estimate their position based on the DL-TDoA message (DTM) received from at least one anchor device (DT-anchor). In DL-TDoA, the anchor device transmits or broadcasts the DTM, and the tag device passively receives the DTM, thereby preventing exposure of the position of the tag device.

In DL-TDoA, the anchor device may precisely measure its own DTM transmission time and the reception time of the received DTM. The anchor device may include the transmission time in the DTM it transmits or broadcasts. The tag device may measure the reception times of all received DTMs and estimate its position by using the reception timestamps and obtained coordinates of the anchor devices. DL-TDoA may be classified as a type of one way ranging like Uplink TDoA. DL-TDoA may be referred to as DL-TDoA localization.

"Anchor device" may be a UWB device deployed at a specific position to provide a positioning service. For example, the anchor device may be a UWB device installed by a service provider on a wall, ceiling, structure, or the like in a room to provide an indoor positioning service. In DL-TDoA, the anchor device may be a device that transmits the DTM that the tag device may use to calculate the position based on TDoA localization (DL-TDoA localization). In DL-TDoA, the anchor devices may be divided into the Initiator anchor and Responder anchors according to the order and role of transmitting messages and participate in the ranging round. The anchor device may be referred to as a UWB anchor or a UWB anchor device. The anchor device of DL-TDoA may be referred to as a DL-TDoA anchor or DT-anchor.

The "Initiator anchor" may notify of the initiation of the TDoA ranging round (DL-TDoA ranging round). In DL-TDoA, the Initiator anchor may initiate a DL-TDoA ranging round by transmitting an initiation message and may schedule the transmission time of the Responder anchor(s). For example, the Initiator anchor may schedule the ranging slot in which the Responder anchor(s) operating in the same ranging round sends a response message (response DTM). The initiation message may be referred to as an initiator DTM, a poll message, a Poll DTM, or a first DTM. The Initiator anchor may be referred to as an initiator UWB anchor, an Initiator anchor device, or an initiator DT-anchor.

The Initiator anchor may additionally transfer an end message (final DTM) message after receiving the response from the Responder anchor(s). The Initiator anchor may additionally transmit a final DTM after all Responder anchors in the same cluster transmit a response message (response DTM) in the DL-TDoA ranging round. The end message may be referred to as final DTM or third DTM.

There may be at least one Reference Initiator anchor in the DL-TDoA network. The Reference Initiator anchor serves as a global time reference for inter-cluster synchronization as an Initiator anchor, and may configure a common ranging block structure for the DL-TDoA network to operate. The Reference Initiator anchor may be referred to as a master anchor or a global anchor.

The Responder anchor may be a UWB anchor responding to the initiation message of the Initiator anchor. The Responder anchor may respond to the Initiator anchor with a response message. The response message may be referred to as a responder DTM, a response DTM, or a second DTM. The "Responder anchor" may also be referred to as a Responder UWB anchor, a Responder UWB anchor device, a Responder anchor device, etc.

The "tag device" may estimate its position (e.g., geographical coordinates) by using TDoA measurement based on the DTM received from the anchor device in DL-TDoA. The tag device may previously know the position of the anchor device. The tag device may be referred to as a UWB tag, user equipment (UE), or UWB tag device, and the DL-TDoA tag device may be referred to as a DL-TDoA tag or a DT-tag.

The tag device may receive the message transmitted by the anchor device and measure the reception time of the message. The tag device may obtain the geographic coordinates of the anchor device through an in-band or out-band method. The tag device may skip the ranging block when the position update rate is lower than that supported by the network.

"Cluster" may mean a set of anchor devices covering a specific area. In DL-TDoA, cluster may mean a set of anchor devices that exchange DTMs to provide a position service to at least one tag device. The cluster may be constituted of an Initiator anchor and at least one Responder anchor.

One anchor device may operate in one or more clusters. In this case, the anchor device acting as an Initiator anchor in some clusters may act as a Responder anchor in other clusters. The cluster area may be a space formed by the anchor devices constituting the cluster. To support the positioning service for a wide area, a plurality of clusters may be configured to provide the positioning service to the UE. Cluster may be referred to as a cell.

When determined to make the subject matter of the present invention unnecessarily unclear, the detailed description of related known functions or features may be skipped in describing the disclosure.

Hereinafter, various embodiments of the disclosure are described with reference to the accompanying drawings.

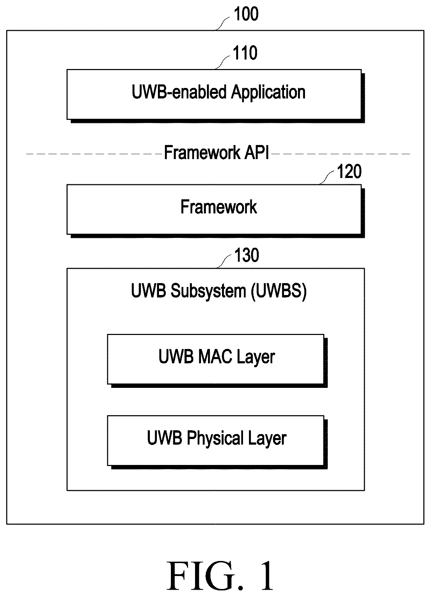

FIG. 1 illustrates an example architecture of a UWB device according to an embodiment of the disclosure.

In the disclosure, the UWB device 100 may be an electronic device supporting UWB communication. The UWB device 100 may be, e.g., a ranging device supporting UWB ranging. In an embodiment, the ranging device may be an enhanced ranging device (ERDEV) defined in IEEE 802.15.4z or a FiRa Device.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

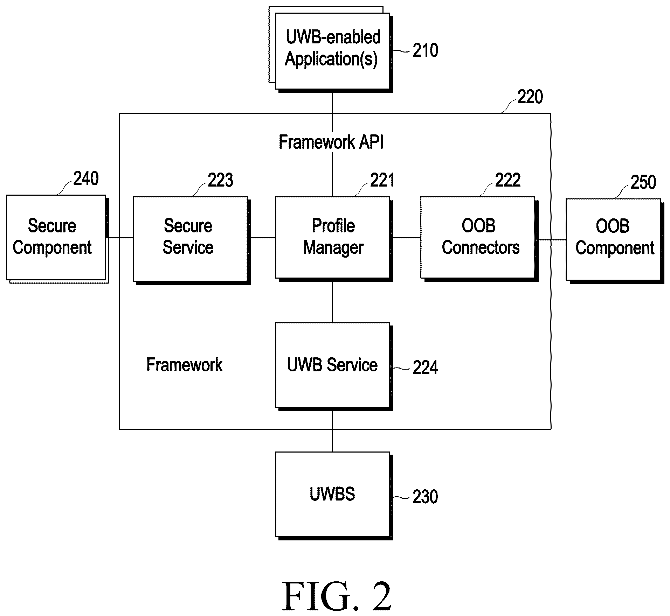

FIG. 2 illustrates an example configuration of a framework of a UWB device according to an embodiment of the disclosure.

The UWB device of FIG. 2 may be an example of the UWB device of FIG. 2.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

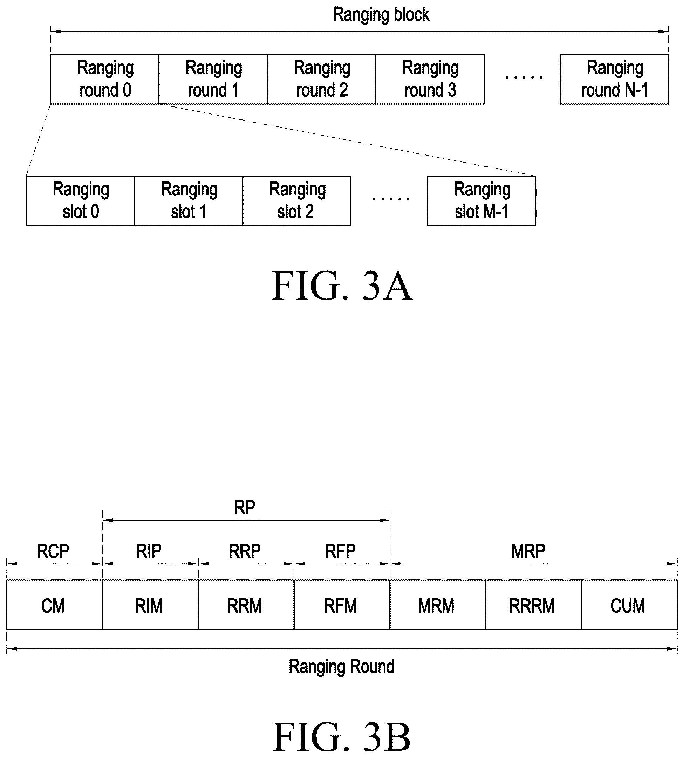

FIG. 3A illustrates an example of a ranging block structure according to an embodiment of the disclosure. FIG. 3B illustrates a structure of a ranging round according to an embodiment of the disclosure.

As shown in FIG. 3A, one ranging block may include at least one ranging round. Each ranging round may include at least one ranging slot. For example, as shown, one ranging block includes N ranging rounds (e.g., ranging round index 0 to ranging round index N-1), and ranging round #0 includes M ranging slots. (e.g., ranging slot 0 to ranging slot M).

The ranging block refers to a time period for ranging. The ranging round may be a period of sufficient duration to complete one entire range-measurement cycle (ranging cycle) in which a set of ranging devices participating in a ranging exchange involves. The ranging slot may be a sufficient period for transmission of at least one ranging frame (RFRAME) (e.g., ranging initiation/reply/final message, etc.).

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The ranging block may be abbreviated as a block, the ranging round as a round, and the ranging slot as a slot.

Referring to FIG. 3B, one ranging round may include a ranging control phase (RCP), a ranging phase (RP), and/or a measurement report phase (MRP). For example, one ranging round may include one slot for the RCP, at least one slot for the RP, and/or at least one slot for the MRP.

According to an embodiment, some of the above-described phases may not be included in the ranging round, or additional phases may be further included in the ranging round. For example, the RCP may not be included in the ranging round. In this case, the ranging control message (RCM) may be merged with the ranging initiation message (RIM). For example, a ranging control update phase (RCUP) and/or a ranging interval update phase (RIUP) may be further included in the ranging round.

The RCP may be a phase in which the controller transmits RCM. The RCM may be a message transmitted by the controller to set ranging parameters. In an embodiment, the RCM may be transmitted in the first slot (slot #0) of the ranging round. The RCM may be abbreviated as control message (CM).

The RP may include a ranging initiation phase (RIP), a ranging response phase (RRP), and/or a ranging final phase (RFP).

The RIP may be a phase in which initiator(s) transmit RIM(s) to responder(s).

The RRP may be a phase in which the responder(s) transmit their ranging response message (RRM)(s) to the initiator.

The RFP may be a phase in which an initiator transmits ranging final message(s) (RFM(s)) to responder(s). The ranging final phase may only be used for DS-TWR.

The MRP may be a phase in which participating ranging devices exchange service information related to ranging measurement. In MRP, a measurement report message (MRM), a ranging result report message (RRRM), and/or a control update message (CUM) may be transmitted. The MRM may be a message transmitted by the UWB device to exchange measurement information. The RRRM may be a message transmitted by the UWB device for reporting the ranging result. The CUM may be a message transmitted by the controller to update control information. The CUM may be referred to as a ranging control update message (RCUM).

The RCUP may be a phase in which the controller transmits a ranging control update message (RCUM). The ranging control update phase may be included in the last slot of the set of ranging rounds designated by the RCM. The RCUM may be a message transmitted by the controller to update ranging parameters for the next ranging round(s). The RCUM may be transmitted in the last slot of the ranging round(s) designated by the RCM. The RCUM may include some or all of the information elements (IEs) employed by the RCM to update the values of parameters.

The ranging interval update phase (RIUP) may be a phase in which the controller transmits a ranging interval update message (RIUM). The RIUM may be a message transmitted by the controller to help synchronization between participating ranging devices or to update the interval between ranging blocks. The RIUM includes the scheduled time of the first RIUM. The RIUM may include the scheduled time of the next RIUM before the next ranging block starts.

If necessary, the plurality of predetermined UWB messages may be merged into one message. For example, the RCM may be merged with the RIM and transported in the RIP. For example, in the case of non-deferred DS-TWR ranging, the RFM may be merged with the MRM and transmitted in the RFP.

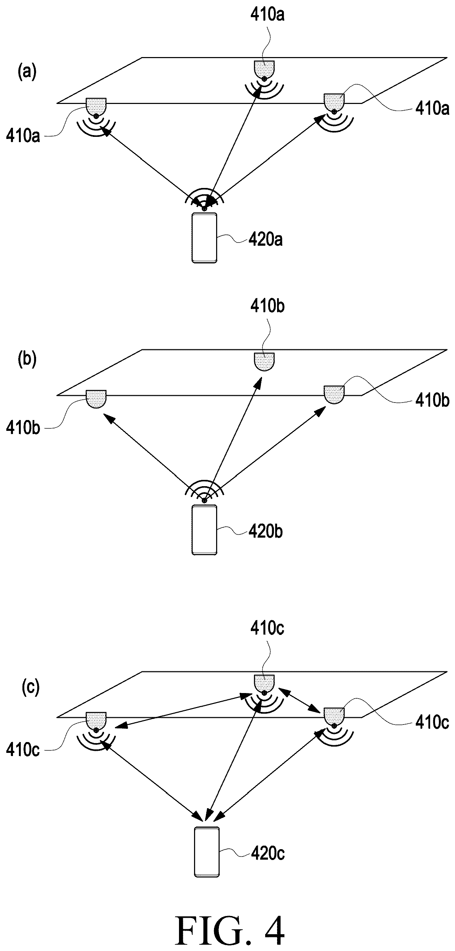

FIG. 4 illustrates various examples of a UWB ranging method according to an embodiment of the disclosure.

Part (a) of FIG. 4 illustrates an example of a two-way ranging (TWR) scheme, part (b) of FIG. 4 illustrates an example of an uplink TDoA (UL-TDoA) scheme which is a type of OWR, and part (c) of FIG. 4 illustrates an example of a downlink TDoA (DL-TDoA) scheme which is a type of OWR.

Referring to part (a) of FIG. 4, the UWB device 420a of the user may perform ranging with at least one UWB anchor 410a through ranging exchange using a plurality of ranging messages. Through the ranging exchange, the time of flight (ToF) may be calculated, and the distance between the two devices may be estimated.

The UWB device 420a may perform single-sided two-way ranging (SS-TWR) or double-sided two-way ranging (DS-TWR) with the UWB anchor 410a. When performing the TWR, the UWB device 420a may serve as an initiator or a responder.

In an embodiment, the TWR may be performed according to a contention-based mode and/or a scheduling-based mode.

Referring to part (b) of FIG. 4, a user's UWB device (UWB tag) 420a may transmit (broadcast) a ranging message to at least one UWB anchor 410b, and the at least one UWB anchor 410b may obtain a TDoA based on the received ranging message and estimate the position of the UWB device 420b based on the TDoA. The TDoA scheme of the embodiment of part (b) of FIG. 4 may be referred to as an uplink TDoA (UL-TDoA) scheme.

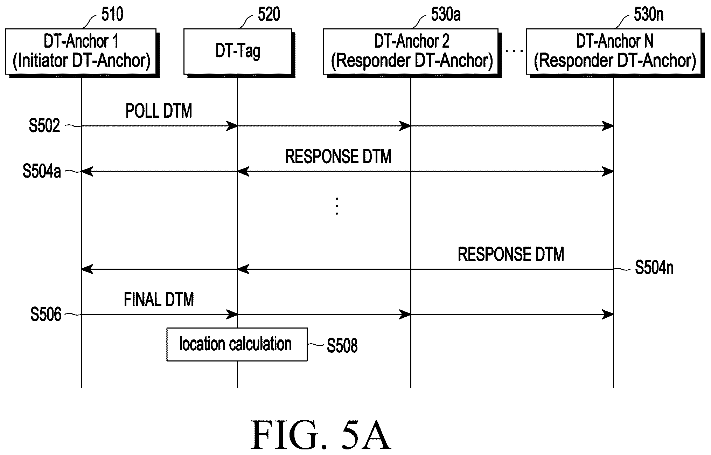

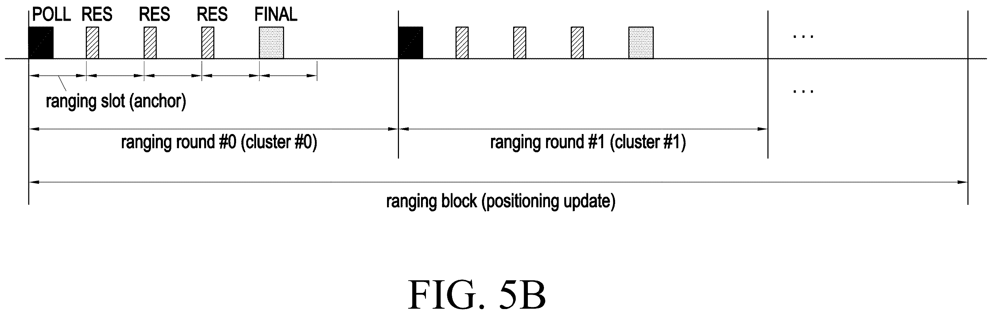

Referring to part (c) of FIG. 4, the UWB device (UWB tag or DT-tag) 420c of the user may estimate its position by receiving ranging messages transmitted/received by at least one UWB anchor 410c. An example of such a DL-TDoA scheme is described below with reference to FIGS. 5A and 5B.

FIG. 5A illustrates a method for a UWB device to perform UWB ranging in a DL-TDoA scheme according to an embodiment of the disclosure.

The embodiment of FIG. 5A assumes that one Initiator anchor (initiator DT-anchor) 510 and n Responder anchors 530a... 530n operate as UWB anchors (DT-anchors). However, the embodiment is not limited thereto, and the number of Initiator anchors and Responder anchors may be varied according to embodiments.

In operation S502, the Initiator anchor 510 may initiate a DL-TDoA round by transmitting or broadcasting the Poll DTM received by the Responder anchor in the cluster. The Poll DTM may include scheduling information for each Responder anchor to transmit the response DTM in the allocated ranging slot.

In an embodiment, all Responder anchors 530a,... 530n may reference the scheduling information in the Poll DTM, thereby knowing whether to transmit the response DTM and the slot (slot index) used to transmit the response DTM.

In operations S504a,..., S504n, all Responder anchors 530a,..., 530n receiving the Poll DTM may respond to the Initiator anchor 510 using the response DTM in the ranging slot allocated by the Poll DTM. For example, each Responder anchor 530a,..., 530n may transmit or broadcast the response DTM in its ranging slot allocated by the Poll DTM.

In operation S506, the Initiator anchor 510 receiving the response DTMs may additionally transmit the final DTM to the Responder anchors 530a,..., 530n. For example, the Initiator anchor 510 may transmit or broadcast the final DTM after receiving response DTMs from Responder anchors 530a,..., 530n.

In operation S508, the tag device (DT-Tag) 520 may receive (or overhear) the Poll DTM, response DTMs, and final DTM and calculate the TDoA values through the information included in the message and the reception timestamp. The tag device 520 may obtain (or estimate) its position based on the calculated TDoA values. Thus, the tag device 520 may estimate its own position without exposing its own position.

FIG. 5B illustrates an example of a ranging block structure for a downlink TDoA scheme according to an embodiment of the disclosure.

The ranging block structure of FIG. 5B may be an example of a ranging block structure for performing the ranging scheme of FIG. 5A.

Referring to FIG. 5B, the ranging block may include a plurality of ranging rounds.

As an embodiment, the ranging block may include a plurality of ranging rounds allocated for each of the plurality of clusters. For example, when n clusters are deployed, the ranging block may include a first ranging round allocated for a first cluster, a second ranging round allocated for a second cluster,... and an nth ranging round allocated for an nth cluster. Although not shown in FIG. 5B, according to an embodiment, a plurality of ranging rounds may be allocated to one cluster, or one ranging round may be allocated to a plurality of clusters.

In an embodiment, a ranging round may include a plurality of ranging slots. The ranging round may include a plurality of ranging slots allocated for each ranging message transmitted by the anchor devices belonging to the cluster associated with the ranging round. For example, if the first cluster includes one Initiator anchor and three Responder anchors, the ranging round for the first cluster may include a first ranging slot (e.g., ranging slot index 0) allocated for transmission/reception of the Poll message of the Initiator anchor included in the first cluster, a second ranging slot allocated for transmission/reception of the response message of the first Responder anchor, a third ranging slot allocated for transmission/reception of the response message of the second Responder anchor, a fourth ranging slot allocated for transmission/reception of the response message of the third Responder anchor, and a fourth ranging slot allocated for transmission/reception of the final message of the Initiator anchor.

In this scheme, ranging slots may be allocated to the ranging round for each cluster.

Through the ranging block structure as in the embodiment of FIG. 5B, the anchor devices of each cluster may exchange ranging messages in one cycle through their own ranging rounds in one ranging block, and the UE (tag device) may receive these ranging messages and calculate its position. Such an operation may be repeated for each ranging block. Thus, the location of the UE may be updated in the period of the ranging block.

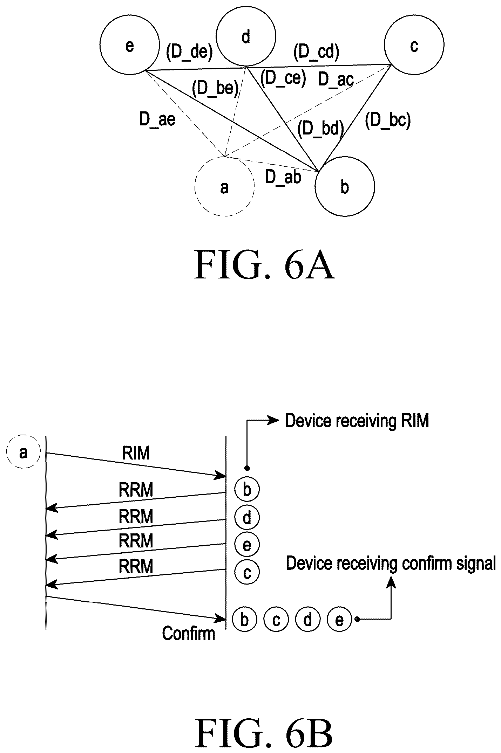

FIG. 6A is a view illustrating ranging between devices according to an embodiment of the disclosure.

Referring to FIG. 6A, each of a first UWB device (a), a second UWB device (b), a third UWB device (c), a fourth UWB device (d), and a fifth UWB device (e) may perform group ranging for file, data and/or service sharing between devices.

According to an embodiment, the first UWB device (a) may perform UWB contention-based ranging with each of the second UWB device (b), the third UWB device (c), the fourth UWB device (d), and the fifth UWB device (e) within a preset or user input-based distance. The first UWB device (a) may calculate distances (D_ab, D_ac, D_ad, D_ae) to each of the second UWB device (b), the third UWB device (c), the fourth UWB device (d), and the fifth UWB device (e) based on a UWB contention-based ranging result.

In this case, the first UWB device (a) may receive a response signal from at least one of the second UWB device (b), the third UWB device (c), the fourth UWB device (d), and the fifth UWB device (e), and transmit a confirm signal corresponding to the response signal. According to an embodiment, the confirm signal may include information about the UWB device that transmitted the response signal. According to an embodiment, at least one of the second UWB device (b), the third UWB device (c), the fourth UWB device (d), and the fifth UWB device (e) may calculate a distance to the first UWB device (a) based on the response signal and the confirm signal.

According to an embodiment, at least one of the second UWB device (b), the third UWB device (c), the fourth UWB device (d), and the fifth UWB device (e) may overhear a first response signal transmitted by another UWB device to the first UWB device (a) and transmit a second response signal for the first response signal to the corresponding UWB device. According to an embodiment, the second response signal may include information about the UWB device that transmitted the overheard first response signal. According to an embodiment, at least one of the second UWB device (b), the third UWB device (c), the fourth UWB device (d), and the fifth UWB device (e) may calculate a distance to another UWB device transmitting a response signal to the first UWB device (a).

According to an embodiment, the second UWB device (b) may calculate distances (D_bc, D_bd, D_be) to each of the third UWB device (c), the fourth UWB device (d), and the fifth UWB device (e) based on the first response signal and the second response signal. According to an embodiment, the third UWB device (c) may calculate distances (D_cd, D_ce) to each of the fourth UWB device (d) and the fifth UWB device (e) based on the first response signal and the second response signal. According to an embodiment, the fourth UWB device (c) may calculate a distance (D_de) to the fifth UWB device (e) based on the first response signal and the second response signal.

FIG. 6B is a view illustrating a ranging procedure of a transmitting device according to an embodiment of the disclosure.

Referring to FIG. 6B, the first UWB device (a) may transmit a ranging initiation message (RIM). At least one of the second UWB device (b), the third UWB device (c), the fourth UWB device (d), and the fifth UWB device (e) may receive the RIM and transmit a ranging response message (RRM) to the first UWB device (a) in response to the RIM. The first UWB device (a) may receive the RRM and transmit an identify message to at least one of the second UWB device (b), the third UWB device (c), the fourth UWB device (d), and the fifth UWB device (e) in response to the RRM.

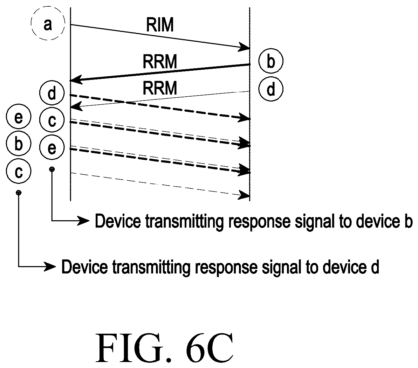

FIG. 6C is a view illustrating a ranging procedure of a receiving device according to an embodiment of the disclosure.

Referring to FIG. 6C, the first UWB device (a) may transmit a ranging initiation message (RIM). At least one of the second UWB device (b), the third UWB device (c), the fourth UWB device (d), and the fifth UWB device (e) may receive the RIM and transmit a ranging response message (RRM) to the first UWB device (a) in response to the RIM.

According to an embodiment, at least one of the third UWB device (c), the fourth UWB device (d), and the fifth UWB device (e) may receive (or overhear) an RRM transmitted by the second UWB device (b) and transmit a response message responding to the RRM to the second UWB device (b). According to an embodiment, the response message may include information about the second UWB device (b) that transmitted the RRM.

According to an embodiment, at least one of the second UWB device (b), the third UWB device (c), and the fifth UWB device (e) may receive (or overhear) an RRM transmitted by the fourth UWB device (d) and transmit a response message responding to the RRM to the fourth UWB device (d). According to an embodiment, the response message may include information about the fourth UWB device (d) that transmitted the RRM.

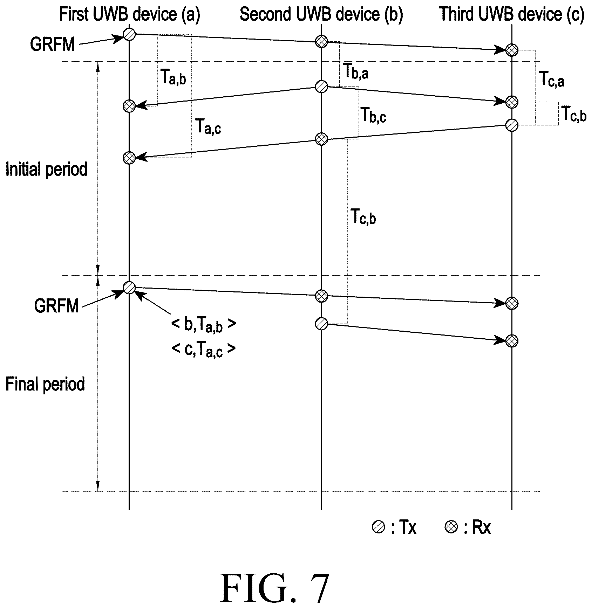

FIG. 7 illustrates an example of group ranging-based message exchange according to an embodiment of the disclosure.

Referring to FIG. 7, in operations 701 and 703, the first UWB device (a) may transmit a group ranging initiation message (GRIM) to each of the second UWB device (b) and the third UWB device (c).

According to an embodiment, at least one of the second UWB device (b) and the third UWB device (c) may receive (or overhear) at least one message during a GRIM period. According to an embodiment, at least one of the first UWB device (a), the second UWB device (b), and the third UWB device (c) may calculate and/or store at least one time stamp before transmission in the Initial period.

According to an embodiment, at least one of the second UWB device (b) and the third UWB device (c) may not perform overhearing after transmission in the Final period.

In operation 705 performed in the Initial period, the second UWB device (b) may transmit a group ranging response message (GRRM) to the first UWB device (a) in response to the GRIM. According to an embodiment, the GRRM may include list information of a device information and a reply time (<device, reply time>). In this case, a message reply time (T_{a,b}) from the first UWB device (a) to the second UWB device (b) may be defined as a time from a transmission time of the GRIM by the first UWB device (a) to a reception time of the GRRM by the first UWB device (a). The message reply time (T_{b,a}) from the second UWB device (b) to the first UWB device (a) may be defined as a time from a reception time of the GRIM by the second UWB device (b) to a transmission time of the GRRM by the second UWB device (b).

According to an embodiment, a contention window may be set within the Initial period.

A reply time (T_{n,m}) defined in the disclosure means a message reply time from an nth UWB device to an mth UWB device. The reply time (T_{n,m}) may mean a time from a time when the nth UWB device transmits a ranging-based message to the mth UWB device to a time when the nth UWB device receives a response message for the ranging-based message from the mth UWB device.

In operation 707 performed in the Initial period, the third UWB device (c) may receive (or overhear) the GRRM transmitted by the second UWB device (b).

In operation 709 performed in the Initial period, the third UWB device (c) may transmit a GRRM to the first UWB device (a) in response to the GRIM. According to an embodiment, the GRRM may include list information of a device information and a reply time (<device, reply time>). In this case, a message reply time (T_{a,c}) from the first UWB device (a) to the third UWB device (c) may be defined as a time from a transmission time of the GRIM by the first UWB device (a) to a reception time of the GRRM by the first UWB device (a). The message reply time (T_{c,a}) from the third UWB device (c) to the first UWB device (a) may be defined as a time from a reception time of the GRIM by the third UWB device (c) to a transmission time of the GRRM by the third UWB device (c). The message reply time (T_{c,b}) from the third UWB device (c) to the second UWB device (b) may be defined as a time from a reception time of a GRRM by the third UWB device (c) to a transmission time of a GRRM by the third UWB device (c).

In operation 711 performed in the Initial period, the third UWB device (c) may transmit a response message to the second UWB device (b) in response to the GRRM. In this case, the message reply time (T_{b,c}) from the second UWB device (b) to the third UWB device (c) may be defined as a time from a transmission time of the GRRM by the second UWB device (b) to a reception time of the response message for the GRRM by the second UWB device (b).

In operations 713 and 715 performed in the Final period, the first UWB device (a) may transmit a group ranging final message (GRFM) to each of the second UWB device (b) and the third UWB device (c). According to an embodiment, the GRFM may include list information of a device information and a reply time (<device, reply time>). For example, the GRFM may include identification information for the second UWB device (b) and reply time information (<b,T_{a,b}>) from the first UWB device (a) to the second UWB device (b). For example, the GRFM may include identification information for the third UWB device (c) and reply time information (<c,T_{a,c}>) from the first UWB device (a) to the third UWB device (c).

According to an embodiment, a contention-free window (scheduled operation) may be set within the Final period.

In operation 717 performed in the Final period, the second UWB device (b) may transmit a GRFM to the third UWB device (c). According to an embodiment, the GRFM may include list information of a device information and a reply time (<device, reply time>).

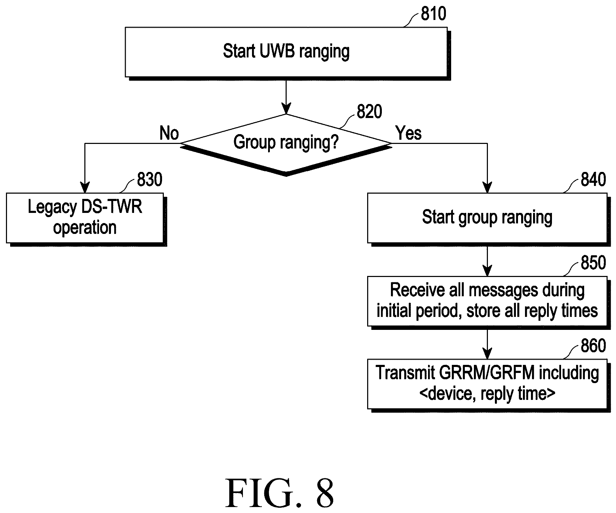

FIG. 8 is a flowchart illustrating a group ranging operation according to an embodiment of the disclosure.

Referring to FIG. 8, in operation 810, a UWB device may perform and/or initiate UWB ranging. In operation 820, the UWB device may determine whether the UWB ranging is for group ranging.

If the UWB ranging is not for group ranging (820-No), in operation 830, the UWB device may perform a Legacy DS-TWR operation.

If the UWB ranging is for group ranging (820-Yes), in operation 840, the UWB device may perform and/or initiate group ranging. In operation 850, the UWB device may receive (or overhear) all messages during the Initial period and calculate all reply times. In operation 860, the UWB device may transmit a GRRM and/or a GRFM including device information and reply time information (<device, reply time>).

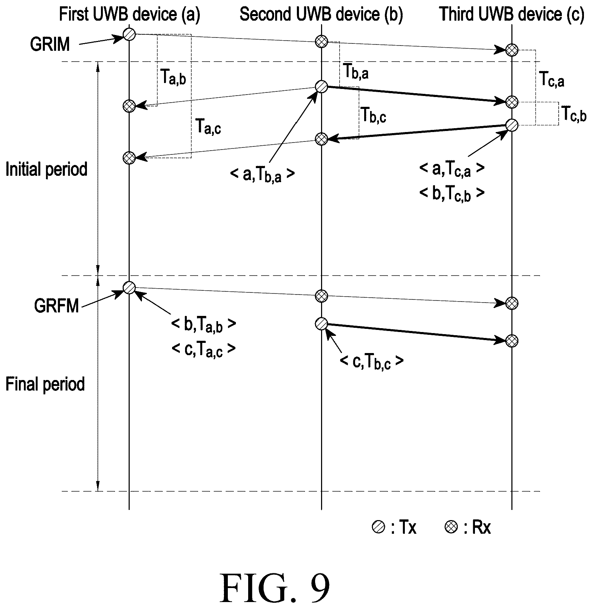

FIG. 9 illustrates an example of group ranging-based message exchange according to an embodiment of the disclosure.

Referring to FIG. 9, in operations 901 and 903, the first UWB device (a) may transmit a group ranging initiation message (GRIM) to each of the second UWB device (b) and the third UWB device (c).

In operation 905 performed in the Initial period, the second UWB device (b) may transmit a group ranging response message (GRRM) to the first UWB device (a) in response to the GRIM. According to an embodiment, the GRRM may include list information (<a,T_{b,a}>) of device information for the first UWB device (a) and a reply time (T_{b,a}). In this case, the message reply time (T_{b,a}) from the second UWB device (b) to the first UWB device (a) may be defined as a time from a reception time of the GRIM by the second UWB device (b) to a transmission time of the GRRM by the second UWB device (b).

In operation 907 performed in the Initial period, the third UWB device (c) may receive (or overhear) the GRRM transmitted by the second UWB device (b). The GRRM may include list information (<a,T_{b,a}>) of device information for the first UWB device (a) and a reply time (T_{b,a}).

In operation 909 performed in the Initial period, the third UWB device (c) may transmit a GRRM to the first UWB device (a) in response to the GRIM. The GRRM may include first list information (<a,T_{c,a}>) of device information for the first UWB device (a) and a reply time (T_{c,a}), and second list information (<a,T_{c,a}>) of device information for the second UWB device (b) and a reply time (T_{c,b}).

In operation 911 performed in the Initial period, the third UWB device (c) may transmit a GRRM to the second UWB device (b). The GRRM may include first list information (<a,T_{c,a}>) of device information for the first UWB device (a) and a reply time (T_{c,a}), and second list information (<a,T_{c,a}>) of device information for the second UWB device (b) and a reply time (T_{c,b}).

In the Initial period, the first UWB device (a) may identify and/or calculate a distance between the first UWB device (a) and the second UWB device (b). In the Initial period, the first UWB device (a) may identify and/or calculate a distance between the first UWB device (a) and the third UWB device (c). In the Initial period, the second UWB device (b) may identify and/or calculate a distance between the second UWB device (b) and the third UWB device (c).

In operations 913 and 915 performed in the Final period, the first UWB device (a) may transmit a group ranging final message (GRFM) to each of the second UWB device (b) and the third UWB device (c). According to an embodiment, the GRFM may include first list information (<b,T_{a,b}>) of device information for the second UWB device (b) and a reply time (T_{a,b}), and second list information (<c,T_{a,c}>) of device information for the third UWB device (c) and a reply time (T_{a,c}). According to an embodiment, the order of list information included in the GRFM may indicate a scheduling order.

In operation 917 performed in the Final period, the second UWB device (b) may transmit a GRFM to the third UWB device (c). According to an embodiment, the GRFM may include list information (<b,T_{b,c}>) of device information for the third UWB device (c) and a reply time (T_{b,c}). According to an embodiment, the second UWB device (b) may omit GRFM transmission to the third UWB device (c).

In the Final period, the second UWB device (b) may identify and/or calculate a distance between the first UWB device (a) and the second UWB device (b). In the Final period, the third UWB device (c) may identify and/or calculate a distance between the first UWB device (a) and the third UWB device (c). In the Final period, the third UWB device (c) may identify and/or calculate a distance between the second UWB device (b) and the third UWB device (c).

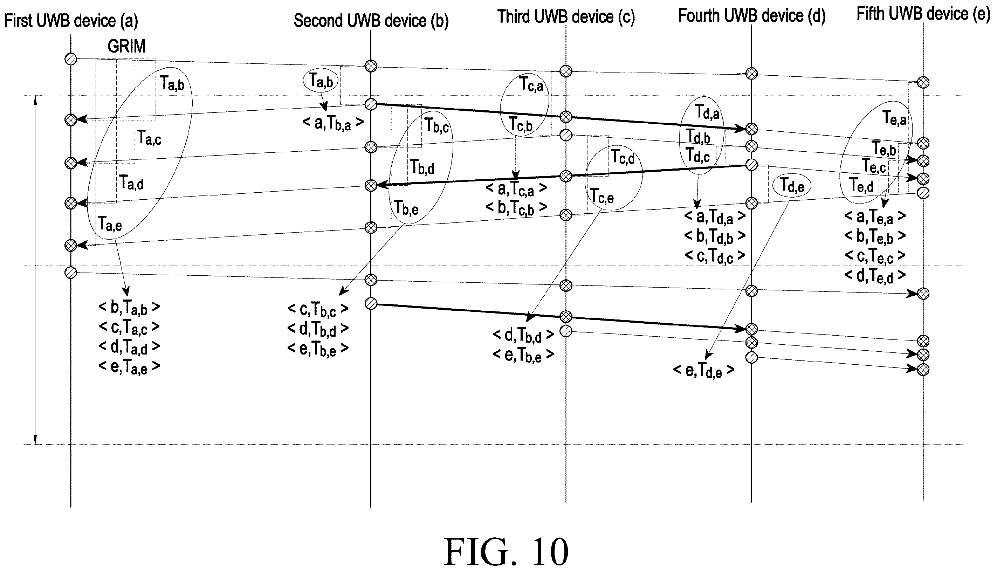

FIG. 10 illustrates an example of group ranging-based message exchange according to an embodiment of the disclosure.

Referring to FIG. 10, the first UWB device (a) may transmit a GRIM to each of the second UWB device (b), the third UWB device (c), the fourth UWB device (d), and the fifth UWB device (e).

The second UWB device (b) may transmit a GRRM including list information (<a, T_{b,a}>) of device information for the first UWB device (a) and a reply time (T_{b,a}) to the first UWB device (a) in response to the GRIM. In this case, at least one of the third UWB device (c), the fourth UWB device (d), and the fifth UWB device (e) may receive (or overhear) the GRRM. The first UWB device (a) may identify a reply time (T_{a,b}) based on the GRIM and the GRRM, and calculate and/or identify a distance between the first UWB device (a) and the second UWB device (b).

The third UWB device (c) may transmit a GRRM including first list information (<a, T_{c,a}>) of device information for the first UWB device (a) and a reply time (T_{c,a}) and second list information (<b, T_{c,b}>) of device information for the second UWB device (b) and a reply time (T_{c,b}) to the first UWB device (a) in response to the GRIM. In this case, at least one of the second UWB device (b), the fourth UWB device (d), and the fifth UWB device (e) may receive (or overhear) the GRRM. The first UWB device (a) may identify a reply time (T_{a,c}) based on the GRIM and the GRRM, and calculate and/or identify a distance between the first UWB device (a) and the third UWB device (c). The second UWB device (b) may identify a reply time (T_{b,c}) based on the GRIM and the GRRM, and calculate and/or identify a distance between the second UWB device (b) and the third UWB device (c).

The fourth UWB device (d) may transmit a GRRM including first list information (<a, T_{d,a}>) of device information for the first UWB device (a) and a reply time (T_{d,a}), second list information (<b, T_{d,b}>) of device information for the second UWB device (b) and a reply time (T_{d,b}), and third list information (<c, T_{d,c}>) of device information for the third UWB device (c) and a reply time (T_{d,c}) to the first UWB device (a) in response to the GRIM. In this case, at least one of the second UWB device (b), the third UWB device (c), and the fifth UWB device (e) may receive (or overhear) the GRRM. The first UWB device (a) may identify a reply time (T_{a,d}) based on the GRIM and the GRRM, and calculate and/or identify a distance between the first UWB device (a) and the fourth UWB device (d). The second UWB device (b) may identify a reply time (T_{b,d}) based on the GRIM and the GRRM, and calculate and/or identify a distance between the second UWB device (b) and the fourth UWB device (d). The third UWB device (c) may identify a reply time (T_{c,d}) based on the GRIM and the GRRM, and calculate and/or identify a distance between the third UWB device (c) and the fourth UWB device (d).

The fifth UWB device (e) may transmit a GRRM including first list information (<a, T_{e,a}>) of device information for the first UWB device (a) and a reply time (T_{e,a}), second list information (<b, T_{e,b}>) of device information for the second UWB device (b) and a reply time (T_{e,b}), third list information (<c, T_{d,c}>) of device information for the third UWB device (c) and a reply time (T_{e,c}), and fourth list information (<c, T_{d,c}>) of device information for the fourth UWB device (d) and a reply time (T_{e,d}) to the first UWB device (a) in response to the GRIM. In this case, at least one of the second UWB device (b), the third UWB device (c), and the fourth UWB device (d) may receive (or overhear) the GRRM. The first UWB device (a) may identify a reply time (T_{a,e}) based on the GRIM and the GRRM, and calculate and/or identify a distance between the first UWB device (a) and the fifth UWB device (e). The second UWB device (b) may identify a reply time (T_{b,e}) based on the GRIM and the GRRM, and calculate and/or identify a distance between the second UWB device (b) and the fifth UWB device (e). The third UWB device (c) may identify a reply time (T_{c,e}) based on the GRIM and the GRRM, and calculate and/or identify a distance between the third UWB device (c) and the fifth UWB device (e). A distance between the second UWB device (b) and the fifth UWB device (e) may be calculated and/or identified. The fourth UWB device (d) may identify a reply time (T_{d,e}) based on the GRIM and the GRRM, and calculate and/or identify a distance between the fourth UWB device (d) and the fifth UWB device (e).

The first UWB device (a) may transmit a GRFM including a plurality of lists (<b,T_{a,b}>, <c,T_{a,c}>, <d,T_{a,d}>, <e,T_{a,e}>) to at least one of the second UWB device (b), the third UWB device (c), the fourth UWB device (d), and the fifth UWB device (e).

The second UWB device (b) may transmit a GRFM including a plurality of lists (<c,T_{b,c}>, <d,T_{b,d}>, <e,T_{b,e}>) to at least one of the third UWB device (c), the fourth UWB device (d), and the fifth UWB device (e).

The third UWB device (c) may transmit a GRFM including a plurality of lists (<d,T_{c,d}>, <e,T_{c,e}>) to at least one of the fourth UWB device (d) and the fifth UWB device (e).

The fourth UWB device (d) may transmit a GRFM including a list (<e,T_{d,e}>) to the fifth UWB device (e).

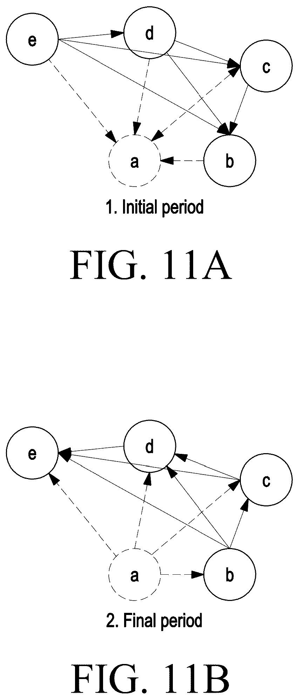

FIG. 11A illustrates an example illustrating an initial period during group ranging-based message exchange according to an embodiment of the disclosure, and FIG. 11B illustrates an example illustrating a final period during group ranging-based message exchange according to an embodiment of the disclosure.

When not performing group ranging-based message exchange, if n UWB devices each perform message exchange, 3*ₙC₂ message exchanges are required to determine all distances between n UWB devices.

In the group ranging-based message exchange proposed in the disclosure, n UWB devices may determine all distances between n UWB devices with 2n-1 message exchanges. For example, 5 UWB devices may determine all distances between 5 UWB devices through 9 message exchanges.

The first UWB device (a) may transmit a GRIM to each of the second UWB device (b), the third UWB device (c), the fourth UWB device (d), and the fifth UWB device (e).

Referring to FIG. 11A, in the initial period, the first UWB device (a) may receive a first response message (GRRM) which is a response to the GRIM from each of the second UWB device (b), the third UWB device (c), the fourth UWB device (d), and the fifth UWB device (e). In the initial period, the second UWB device (b) may receive a second response message from each of the third UWB device (c), the fourth UWB device (d), and the fifth UWB device (e). In the initial period, the third UWB device (c) may receive a third response message from each of the fourth UWB device (d) and the fifth UWB device (e). In the initial period, the fourth UWB device (d) may receive a fourth response message from the fifth UWB device (e).

Referring to FIG. 11B, in the final period, the first UWB device (a) may transmit a first GRFM to each of the second UWB device (b), the third UWB device (c), the fourth UWB device (d), and the fifth UWB device (e). In the final period, the second UWB device (b) may transmit a second GRFM to each of the third UWB device (c), the fourth UWB device (d), and the fifth UWB device (e). In the final period, the third UWB device (c) may transmit a third GRFM to each of the fourth UWB device (d) and the fifth UWB device (e). In the final period, the fourth UWB device (d) may transmit a fourth GRFM to the fifth UWB device (e).

Meanwhile, there is a need to distinguish the RIM (ranging initiation message), RRM (ranging response message), and RFM (ranging final message) used in SS-TWR and DS-TWR from the GRIM, GRRM, and GRFM proposed in the disclosure, respectively.

According to an embodiment, in the case of Time-scheduled TWR, a Data frame is used, and Ranging and Group ranging may be distinguished using a Reserved bit of the Frame Control field based on Table 1 below.

**[Table 1] Frame Control Field of Data Frame**

| Field | Size (bits) | Notes |
|---|---|---|
| Frame Type | 3 | 0b001: Data |
| Security Enabled | 1 | 0b1: Auxiliary Security Header is present |
| Frame Pending | 1 | 0b0: No pending frame for the recipient |
| | | 0b1: More frames will be followed for the recipient |
| AR | 1 | 0b0: No ACK frame is required |
| PAN ID Compression | 1 | 1: Destination PAN ID field and Source PAN ID field are not present |
| Reserved | 1 | 0b0: |
| | | 0b1: Group ranging |
| Sequence Number Suppression | 1 | 0b1: Sequence number field is not present |
| IE Present | 1 | 0b1: Header IE and Payload IE are contained in the frame |
| Destination Addressing Mode | 2 | 0b10: Destination address field contains short address |
| Frame Version | 2 | 0b10: IEEE Std 802.15.4-2020 |
| Source Addressing Mode | 2 | 0b00: Source address field is not present |

According to an embodiment, UWB devices that have received a group ranging message may calculate reply time by overhearing all messages related to group ranging in the initial period (transmitted to surrounding terminals through GRRM and GRFM).

In the case of FiRa's contention-based TWR using a Multipurpose frame, since there is no available Reserved bit in the Frame Control field of the MAC header as illustrated in Table 2 below, there is a need to use another method to distinguish the GRIM, GRRM, and GRFM proposed in the disclosure, respectively.

**[Table 2] Frame Control Field of Multipurpose Frame**

| Parameter | Size (bits) | Notes |
|---|---|---|
| Frame Type | 3 | Ob101: Multipurpose. |
| Long Frame Control | 1 | 0b1: Multipurpose long frame. |
| Destination Addressing Mode | 2 | 0b00: PAN ID and address fields are not present. |
| | | 0b10: Address field contains a short address (16 bit). |
| | | 0b11: Address field contains a extended address (64 bit). |
| Source Addressing Mode | 2 | 0b10: Address field contains a short address (16 bit). |
| | | 0b11: Address field contains a extended address (64 bit). |
| PAN ID Present | 1 | 0b0: PAN ID is not present in the MHR. |
| Security Enabled | 1 | 0b1: Frame is protected by the MAC security requirements. |
| Sequence Number Suppression | 1 | 0b0: Sequence number field is included in the MHR |
| | | 0b1: Sequence number field is not included in the MHR |
| Frame Pending | 1 | 0b0: No pending frames to be sent |
| | | 0b1: Frame has more pending data or trailing frames |
| Frame Version | 2 | 0b00 |
| Ack Request | 1 | 0b0: Acknowledgement is not required from the recipient |
| | | 0b01: Acknowledgement is required from the recipient |
| IE Present | 1 | 0b0: Frame does not contain Header IE or Payload IE |
| | | 0b1: Frame contains Header IE or Payload IE |

According to an embodiment, in the case of contention-based TWR, the messages of Tables 3 and 4 below may be used to distinguish the GRIM, GRRM, and GRFM proposed in the disclosure, respectively.

According to an embodiment, based on Tables 3 and 4 below, 1 bit among 4 bits of the RFU bit of Control Message Type 2 transmitted by the Controller of contention-based ranging may be used as a group ranging indicator to indicate that it is Group ranging.

**[Table 3] Payload IE of Control Message Type 2**

| Parameter | Size (bits) | Notes |
|---|---|---|
| Vendor OUI | 24 | 0x5A18FF |
| UWB Message ID | 4 | 0x3= Control Message |
| RFU | 4 | Reserved For Future set to '0' |
| Message Control | 24 | Message Control field |
| Stride Length | 16 | Number of blocks to be skipped |
| | | If the value is 0x00 then Block Striding is not used |
| RML Size | 0/16 | Size of the RML in octets |
| Responder Management List (RML) | Variable | This list contains the Device MAC Address of the known Responder(s). |

**[Table 4]**

| Parameter | Size (bits) | Notes |
|---|---|---|
| Group ranging indicator | 1 | 0b0: normal ranging |
| | | 0b1: Group ranging |
| RFU | 3 | Reserved For Future set to '0' |

According to an embodiment, a group ranging indicator for UCI may be additionally set with GROUP_RANGING_INDICATOR among Application configuration parameters as illustrated in Table 5 below to configure the corresponding device to operate with group ranging.

**[Table 5]**

| Parameter Name | Length (Octets) | Tag (IDs) | Description |
|---|---|---|---|
| *(*): Can be applied during session active state as well* | | | *Note: unassigned values are reserved for future use* |
| DEVICE_TYPE | 1 | 0x00 | 0x00 = Controlee |
| | | | 0x01 = Controller |
| | | | Values 0x02 to OxFF = RFU |
| RANGING_ROUND_USAGE | 1 | 0x01 | 0x00= RFU |
| | | | 0x01= SS-TWR with Deferred Mode |
| | | | 0x02= DS-TWR with Deferred Mode (default) |
| | | | 0x03= SS-TWR with Non-deferred Mode |
| | | | 0x04= DS-TWR with Non-deferred Mode |
| | | | Values 0x05 to OxFF = RFU |
| STS_CONFIG | 1 | 0x02 | This parameter indicates how system shall generate the STS. |
| | | | 0x00= Static STS (default) |
| | | | 0x01= Dynamic STS |
| | | | 0x02= Dynamic STS for Controlee Individual Key |
| | | | Values 0x03 to 0xFF = RFU |
| GROUP_RANGING_INDICATOR | 1 | 0xXX | 0x00 = normal ranging |
| | | | 0x01 = group ranging |

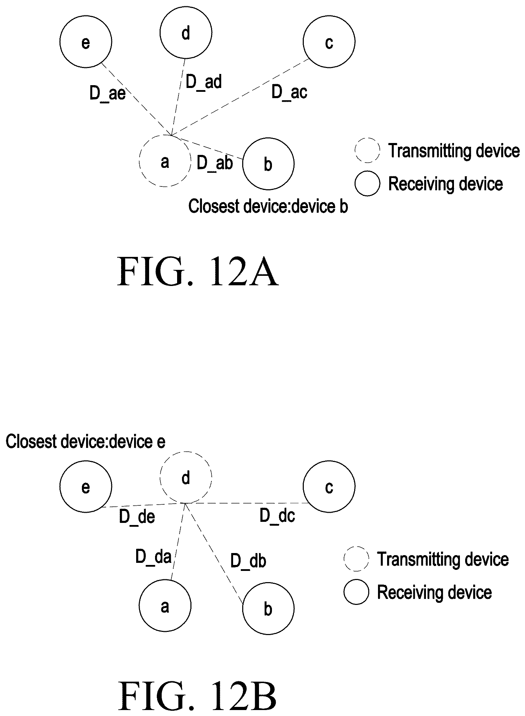

FIG. 12A illustrates an example illustrating an initial sharing procedure based on ranging according to an embodiment of the disclosure.

Referring to FIG. 12A, the first UWB device (a) may perform an initial sharing procedure for data, file, and/or service with each of the second UWB device (b), the third UWB device (c), the fourth UWB device (d), and the fifth UWB device (e) as a transmitting device within a ranging group.

The first UWB device (a) may identify and/or calculate distances (D_ab, D_ac, D_ad, D_ae) between respective UWB devices through group ranging-based message exchange with at least one of the second UWB device (b), the third UWB device (c), the fourth UWB device (d), and the fifth UWB device (e).

FIG. 12B illustrates an example illustrating a resharing procedure based on ranging according to an embodiment of the disclosure.

Referring to FIGS. 12A and 12B, in a resharing procedure where the transmitting device within the ranging group is changed from the first UWB device (a) to the fourth UWB device (d), the topology for group ranging may be maintained without change. In this case, the fourth UWB device (d) may perform an initial sharing procedure for data, file, and/or service with each of the first UWB device (a), the second UWB device (b), the third UWB device (c), and the fifth UWB device (e) as a transmitting device within the ranging group, using distance information between UWB devices identified and/or determined during the group ranging-based message exchange of FIG. 12A.

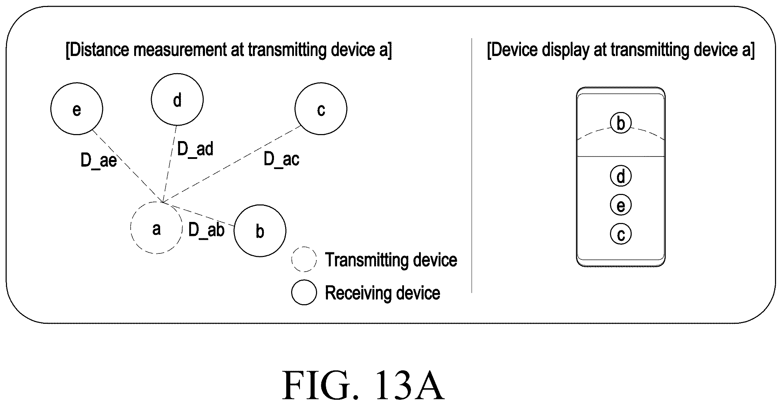

FIG. 13A illustrates an example of distance measurement and device display at a first transmitting device according to an embodiment of the disclosure.

Referring to FIG. 13A, each of the first UWB device (a), the second UWB device (b), the third UWB device (c), the fourth UWB device (d), and the fifth UWB device (e) may perform group ranging for file, data and/or service sharing between devices.

According to an embodiment, the first UWB device (a) may perform UWB contention-based ranging and/or OWR with each of the second UWB device (b), the third UWB device (c), the fourth UWB device (d), and the fifth UWB device (e) within a preset or user input-based distance upon initial sharing of file, data and/or service.

According to an embodiment, the first UWB device (a) may calculate distance and angle (AoA) for each of the second UWB device (b), the third UWB device (c), the fourth UWB device (d), and the fifth UWB device (e) within the preset or the user input-based distance, and obtain location information of each of the second UWB device (b), the third UWB device (c), the fourth UWB device (d), and the fifth UWB device (e).

According to an embodiment, the first UWB device (a) may calculate distances (D_ab, D_ac, D_ad, D_ae) to each of the second UWB device (b), the third UWB device (c), the fourth UWB device (d), and the fifth UWB device (e) based on a UWB contention-based ranging and/or OWR result.

According to an embodiment, the first UWB device (a) may display each of the second UWB device (b), the third UWB device (c), the fourth UWB device (d), and the fifth UWB device (e) in the first UWB device (a) based on the distance information (D_ab, D_ac, D_ad, D_ae). For example, the first UWB device (a) may display the second UWB device (b), the third UWB device (c), the fourth UWB device (d), and the fifth UWB device (e) in the first UWB device (a) in order of proximity to the first UWB device (a) based on the distance information (D_ab, D_ac, D_ad, D_ae).

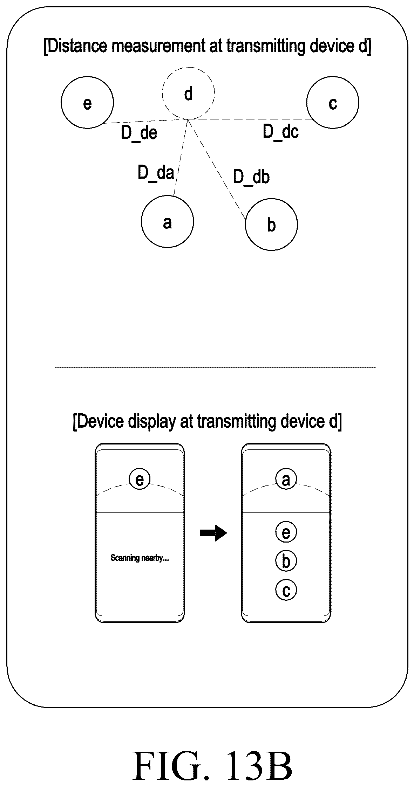

FIG. 13B illustrates an example of distance measurement and device display at a second transmitting device according to an embodiment of the disclosure.

Referring to FIGS. 13A and 13B, when the transmitting device within the ranging group is changed from the first UWB device (a) to the fourth UWB device (d), the fourth UWB device (d) may determine whether the topology for group ranging has changed through responses (BLE messages) about whether each of the first UWB device (a), the second UWB device (b), the third UWB device (c), and the fifth UWB device (e) has moved (identified using an IMU sensor).

According to an embodiment, the first UWB device (a), which is the previous transmitting device, may transmit closest UWB device information of the fourth UWB device (d), which is the new transmitting device, to the fourth UWB device (d). According to an embodiment, the fourth UWB device (d) may display the closest UWB device on a display and perform ranging and/or OWR with the corresponding closest UWB device.

According to an embodiment, the fourth UWB device (d) may additionally display other UWB devices on the display according to search distance readjustment (e.g., search distance readjustment due to a user input).

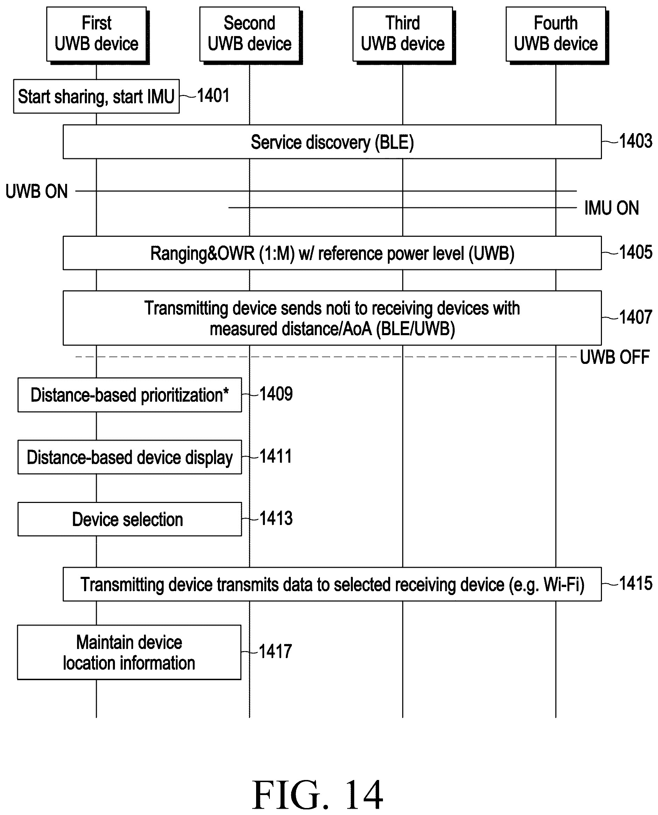

FIG. 14 is a flowchart illustrating an initial sharing procedure according to an embodiment of the disclosure.

Referring to FIG. 14, in operation 1401, the first UWB device may initiate a sharing service (e.g., file sharing) and drive an inertial measurement unit (IMU) sensor. According to an embodiment, when movement is detected before and after search distance range adjustment, all UWB devices within a range where a signal reaches may participate in UWB ranging.

Each of the first UWB device, the second UWB device, the third UWB device, and the fourth UWB device may perform an initial discovery procedure. In operation 1403, at least one of the first UWB device, the second UWB device, the third UWB device, and the fourth UWB device may discover a service through BLE.

According to an embodiment, a UWB function (or a UWB module) for at least one of the first UWB device, the second UWB device, the third UWB device, and the fourth UWB device may be switched to an on state. According to an embodiment, at least one of the second UWB device, the third UWB device, and the fourth UWB device may drive an IMU sensor.

In operation 1405, the first UWB device may perform ranging and/or one-way ranging (OWR) for angle-of-arrival (AOA) with at least one of the second UWB device, the third UWB device, and the fourth UWB device based on a reference power level.

In operation 1407, the first UWB device may transmit a notification message through BLE to at least one electronic device that has been ranged and/or AoA'd.

According to an embodiment, a UWB function (or a UWB module) for at least one of the first UWB device, the second UWB device, the third UWB device, and the fourth UWB device may be switched to an off state.

In operation 1409, the first UWB device may perform distance-based prioritization for a plurality of external UWB devices. According to an embodiment, the first UWB device may perform distance-based prioritization using previous ranging values for an electronic device without a BLE response after initial searching.

In operation 1411, the first UWB device may display a UWB device to provide a service (e.g., file sharing) on a display based on a set and/or adjusted distance.

In operation 1413, the first UWB device may select a UWB device (at least one of the second UWB device to the fourth UWB device) to provide the service (e.g., file sharing). In operation 1415, the first UWB device may provide a service (e.g., data transmission, or file sharing) using Wi-Fi communication to the selected UWB device (at least one of the second UWB device to the fourth UWB device).

In operation 1417, the first UWB device may maintain location information (or device location information) for the UWB devices.

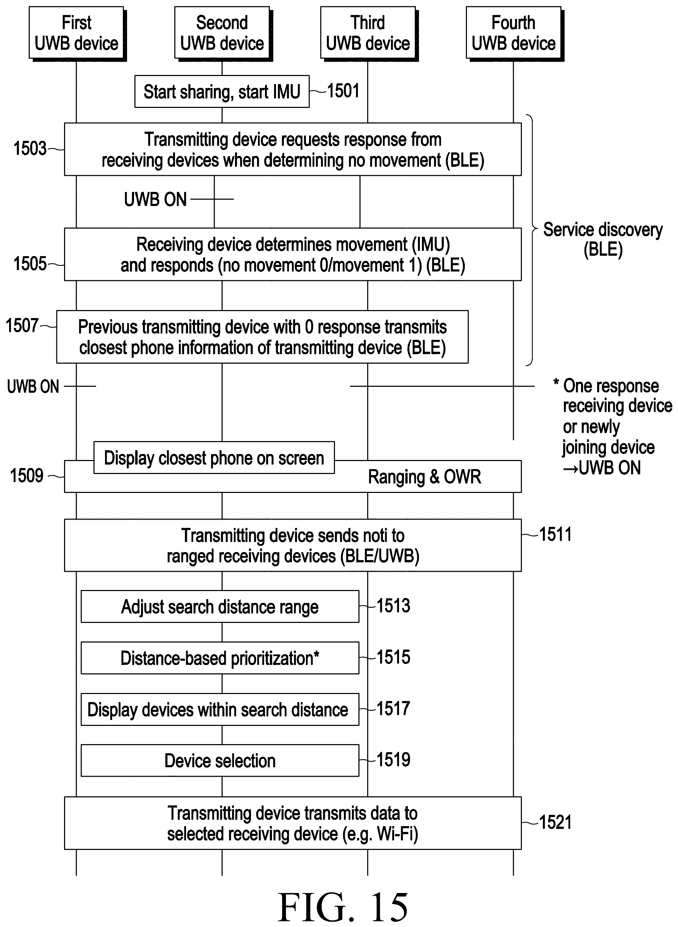

FIG. 15 is a flowchart illustrating a resharing procedure according to an embodiment of the disclosure.

Referring to FIGS. 14 and 15, the transmitting device within the ranging group may be changed from the first UWB device to the second UWB device, and a service (e.g., file sharing) resharing procedure by the second UWB device may be performed.

In operation 1501, the second UWB device may initiate a sharing service (e.g., file sharing) and drive an inertial measurement unit (IMU) sensor. According to an embodiment, when movement is detected before and after search distance range adjustment, all UWB devices within a range where a signal reaches may participate in UWB ranging.

At least one of the first UWB device, the second UWB device, the third UWB device, and the fourth UWB device may perform service discovery through BLE.

In operation 1503, when the second UWB device determines (using an IMU sensor) that the second UWB device has not moved, it may request a response about whether each device has moved from each of the first UWB device, the third UWB device, and the fourth UWB device using BLE communication. According to an embodiment, the second UWB device may switch a UWB function (or a UWB module) to an on state.

In operation 1505, each of the first UWB device, the third UWB device, and the fourth UWB device may determine (using an IMU sensor) whether it has moved and transmit a response message indicating whether it has moved to the second UWB device. According to an embodiment, the response message may be set to 1 bit, where a value of "0" indicates no movement of the corresponding UWB device, and a value of "1" indicates movement of the corresponding UWB device.

In operation 1507, when the first UWB device, which is the transmitting device within the ranging group during initial sharing, indicates no movement of the first UWB device in the response message, the first UWB device may transmit closest device information of the second UWB device to the second UWB device, which is the transmitting device within the ranging group during the resharing procedure, using BLE communication. According to an embodiment, at least one UWB device that indicates movement of the corresponding UWB device in the response message or a UWB device newly joining the ranging group may switch a UWB function (or a UWB module) to an on state.

In operation 1509, the second UWB device may display the closest device on a display and perform ranging and/or OWR.

In operation 1511, the second UWB device may transmit a notification message to at least one ranged UWB device using BLE and/or UWB communication.

In operation 1513, the second UWB device may adjust the range for the search distance.

In operation 1515, the second UWB device may perform distance-based prioritization for a plurality of external UWB devices.

In operation 1517, the second UWB device may display a UWB device to provide a service (e.g., file sharing) within the search distance on a display.

In operation 1519, the second UWB device may select a UWB device (at least one of the first UWB device, the third UWB device, and the fourth UWB device) to provide the service (e.g., file sharing).

In operation 1521, the second UWB device may provide a service (e.g., data transmission, or file sharing) using Wi-Fi communication to the selected UWB device (at least one of the first UWB device, the third UWB device, and the fourth UWB device).

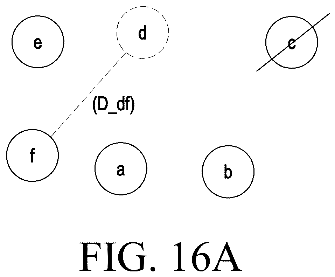

FIG. 16A illustrates an example in which a device configuration within a group is changed according to an embodiment of the disclosure.

Referring to FIG. 16A, the fourth UWB device (d), which is the transmitting device within the ranging group, may receive a plurality of messages about whether each of the receiving devices within the ranging group has moved through BLE communication, and determine whether the topology for the ranging group has changed based on the plurality of messages.

When the topology for the ranging group has not changed and the third UWB device (c) has left the ranging group, the fourth UWB device (d) may exclude the third UWB device (c) from the ranging group and perform ranging only for the sixth UWB device (f) newly joining the ranging group. According to an embodiment, whether the third UWB device (c) has left the ranging group and/or whether the sixth UWB device (f) has joined the ranging group may be determined using an IMU sensor in at least one UWB device.

According to an embodiment, the fourth UWB device (d), which is the transmitting device within the ranging group, may display the closest device on a display and display an appropriate device on the display when readjusting the search distance.

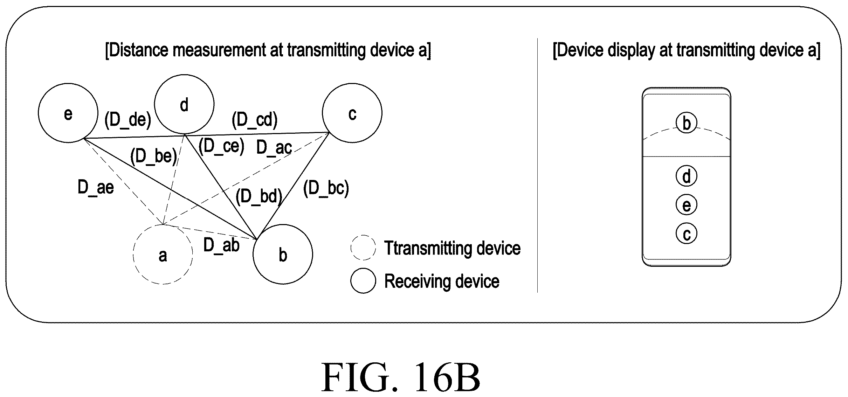

FIG. 16B illustrates an example of distance measurement and device display at a first transmitting device according to an embodiment of the disclosure.

Referring to FIG. 16B, each of the first UWB device (a), the second UWB device (b), the third UWB device (c), the fourth UWB device (d), and the fifth UWB device (e) within the ranging group may perform group ranging for file, data and/or service sharing between devices. The first UWB device (a) may operate as a transmitting device within the ranging group, and each of the second UWB device (b), the third UWB device (c), the fourth UWB device (d), and the fifth UWB device (e) may operate as a receiving device within the ranging group.

The first UWB device (a) may perform ranging with each of the second UWB device (b), the third UWB device (c), the fourth UWB device (d), and the fifth UWB device (e) within a preset or user input-based distance. The first UWB device (a) may calculate distances (D_ab, D_ac, D_ad, D_ae) to each of the second UWB device (b), the third UWB device (c), the fourth UWB device (d), and the fifth UWB device (e) based on a ranging result.

Each of the second UWB device (b), the third UWB device (c), the fourth UWB device (d), and the fifth UWB device (e) may calculate distances between respective devices based on the ranging result.

According to an embodiment, the first UWB device (a) may display each of the second UWB device (b), the third UWB device (c), the fourth UWB device (d), and the fifth UWB device (e) in the first UWB device (a) based on distance information (D_ab, D_ac, D_ad, D_ae) to other devices. For example, the first UWB device (a) may display the second UWB device (b), the fourth UWB device (d), and the fifth UWB device (e), the third UWB device (c) in the display of the first UWB device (a) in order of proximity to the first UWB device (a) based on the distance information (D_ab, D_ac, D_ad, D_ae).

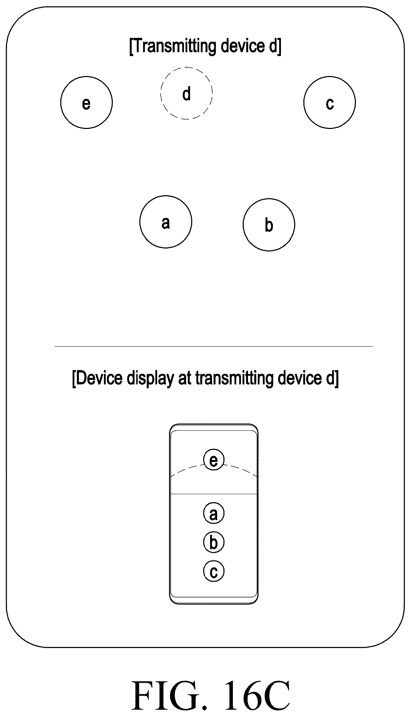

FIG. 16C illustrates an example of distance measurement and device display at a second transmitting device according to an embodiment of the disclosure.

Referring to FIGS. 16B and 16C, when the transmitting device within the ranging group is changed from the first UWB device (a) to the fourth UWB device (d) and the topology for the ranging group has not changed, the fourth UWB device (d) may identify distances between UWB devices using ranging values obtained from previous ranging.

According to an embodiment, the fourth UWB device (d) may display each of the first UWB device (a), the second UWB device (b), the third UWB device (c), and the fifth UWB device (e) in the first UWB device (a) based on distance information to other devices. For example, the fourth UWB device (d) may display the fifth UWB device (e), the first UWB device (a), the second UWB device (b), and the third UWB device (c) in the display of the fourth UWB device (d) in order of proximity to the fourth UWB device (d) based on the distance information.

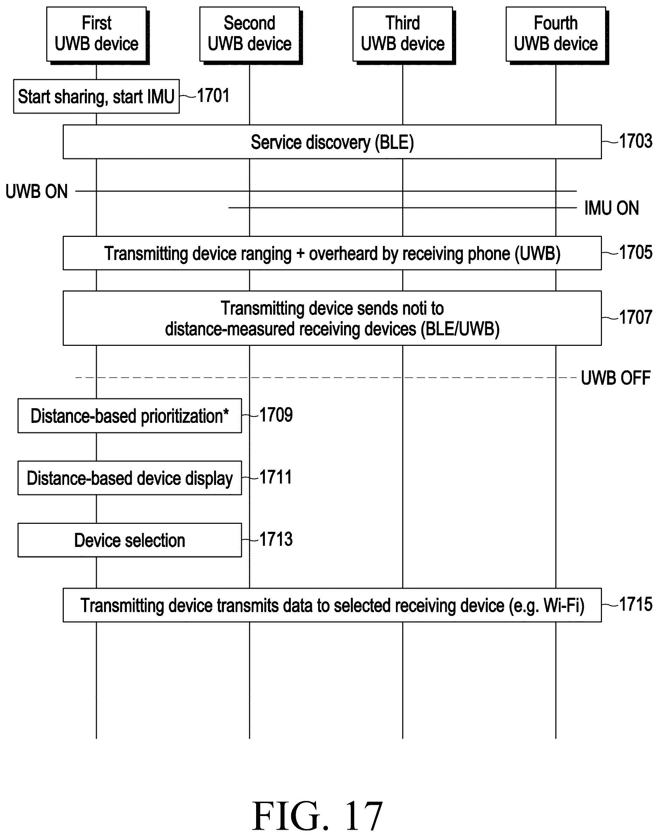

FIG. 17 is a flowchart illustrating an initial sharing procedure according to an embodiment of the disclosure.

Referring to FIG. 17, in operation 1701, the first UWB device may initiate a sharing service (e.g., file sharing) and drive an inertial measurement unit (IMU) sensor. According to an embodiment, each of the first UWB device, the second UWB device, the third UWB device, and the fourth UWB device may perform an initial discovery procedure.

In operation 1703, at least one of the first UWB device, the second UWB device, the third UWB device, and the fourth UWB device may discover a service through BLE.

According to an embodiment, a UWB function (or a UWB module) for at least one of the first UWB device, the second UWB device, the third UWB device, and the fourth UWB device may be switched to an on state. According to an embodiment, at least one of the second UWB device, the third UWB device, and the fourth UWB device may drive an IMU sensor.

In operation 1705, the first UWB device may perform ranging with at least one of the second UWB device, the third UWB device, and the fourth UWB device, and at least one of the second UWB device, the third UWB device, and the fourth UWB device may receive (or overhear) messages transmitted and received between other UWB devices during ranging.

In operation 1707, the first UWB device may transmit a notification message through BLE to at least one UWB device for which distance has been measured.

According to an embodiment, a UWB function (or a UWB module) for at least one of the first UWB device, the second UWB device, the third UWB device, and the fourth UWB device may be switched to an off state.

In operation 1709, the first UWB device may perform distance-based prioritization for a plurality of external UWB devices. According to an embodiment, the first UWB device may perform distance-based prioritization using previous ranging values for an electronic device without a BLE response after initial searching.

In operation 1711, the first UWB device may display a UWB device to provide a service (e.g., file sharing) on a display based on a set and/or adjusted distance.

In operation 1713, the first UWB device may select a UWB device (at least one of the second UWB device to the fourth UWB device) to provide the service (e.g., file sharing).

In operation 1715, the first UWB device may provide a service (e.g., data transmission, or file sharing) using Wi-Fi communication to the selected UWB device (at least one of the second UWB device to the fourth UWB device).

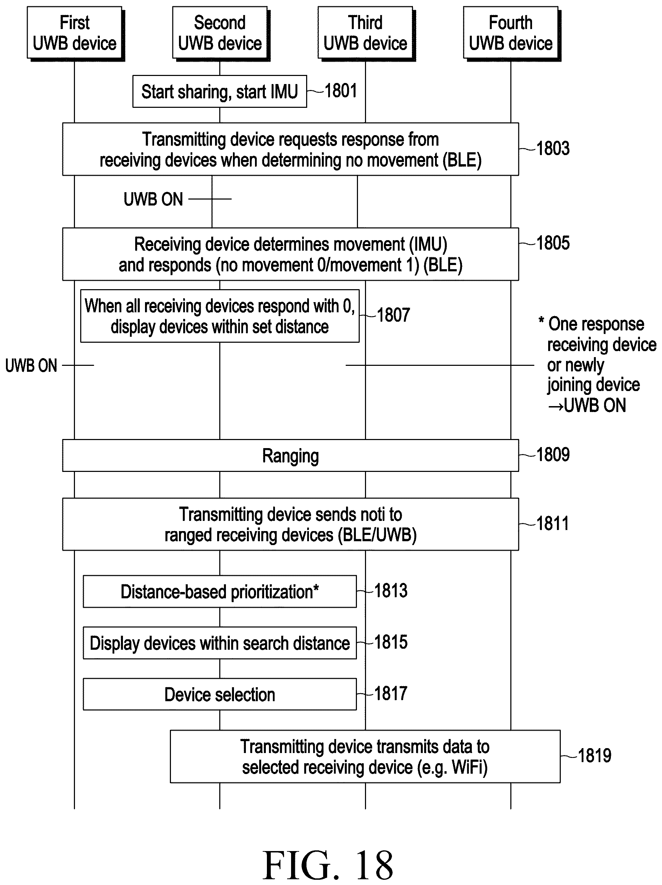

FIG. 18 is a flowchart illustrating a resharing procedure according to an embodiment of the disclosure.

Referring to FIGS. 17 and 18, the transmitting device within the ranging group may be changed from the first UWB device to the second UWB device, and a service (e.g., file sharing) resharing procedure by the second UWB device may be performed.

In operation 1801, the second UWB device may initiate a sharing service (e.g., file sharing) and drive an inertial measurement unit (IMU) sensor.

In operation 1803, when the second UWB device determines (using an IMU sensor) that the second UWB device has not moved, it may request a response about whether each device has moved from each of the first UWB device, the third UWB device, and the fourth UWB device using BLE communication. According to an embodiment, the second UWB device may switch a UWB function (or a UWB module) to an on state.

In operation 1805, each of the first UWB device, the third UWB device, and the fourth UWB device may determine (using an IMU sensor) whether it has moved and transmit a response message indicating whether it has moved to the second UWB device. According to an embodiment, the response message may be set to 1 bit, where a value of "0" indicates no movement of the corresponding UWB device, and a value of "1" indicates movement of the corresponding UWB device.

In operation 1807, when all receiving devices within the ranging group (the first UWB device, the third UWB device, and the fourth UWB device) indicate no movement of the device in the response message, the second UWB device may display all receiving devices within the ranging group (the first UWB device, the third UWB device, and the fourth UWB device) within a set distance.

According to an embodiment, at least one UWB device that indicates movement of the corresponding UWB device in the response message or a UWB device newly joining the ranging group may switch a UWB function (or a UWB module) to an on state.

In operation 1809, the second UWB device may perform ranging. In operation 1811, the second UWB device may transmit a notification message to at least one ranged UWB device using BLE and/or UWB communication.

In operation 1813, the second UWB device may perform distance-based prioritization for a plurality of external UWB devices.

In operation 1815, the second UWB device may display a UWB device to provide a service (e.g., file sharing) within the search distance on a display.

In operation 1817, the second UWB device may select a UWB device (at least one of the first UWB device, the third UWB device, and the fourth UWB device) to provide the service (e.g., file sharing).

In operation 1819, the second UWB device may provide a service (e.g., data transmission, or file sharing) using Wi-Fi communication to the selected UWB device (at least one of the first UWB device, the third UWB device, and the fourth UWB device).

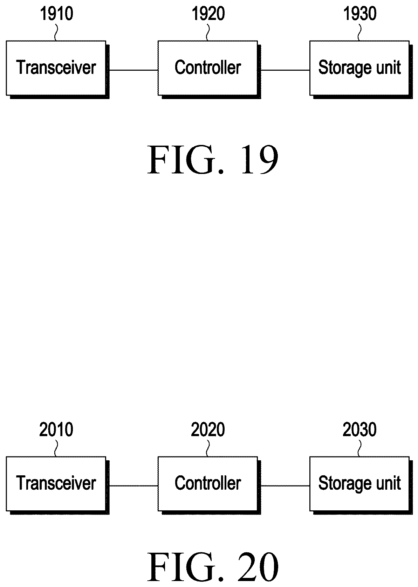

FIG. 19 illustrates a structure of a first UWB device according to an embodiment of the disclosure.

The first UWB device of FIG. 19 is one of the UWB devices illustrated in FIGS. 1 to 18, and may be a transmitting device within a ranging group.

Referring to FIG. 19, the first UWB device may include a transceiver 1910, a controller 1920, and a storage unit 1930. In the disclosure, the controller may be defined as a circuit or an application specific integrated circuit or at least one processor.

The transceiver 1910 may transmit and receive signals to and from other entities, and may also be referred to as a transmission/reception unit.

The controller 1920 may control the overall operation of the UWB device (or UE) according to an embodiment proposed in the disclosure and may also be referred to as a processor. For example, the controller 1920 may control signal flow between blocks to perform operations according to the flowcharts described above. Specifically, the controller 1920 may control, e.g., the operation of the transmitting device within the ranging group described with reference to FIGS. 1 to 18.

The controller 1920 is configured to control to transmit a first message (GRIM) for initiating group ranging to a second UWB device and a third UWB device, receive a second message (GRRM) responding to the first message from the second UWB device, and receive a third message (GRRM) responding to the first message from the third UWB device.

The controller 1920 may be configured to control to transmit a fourth message (GRFM) including a first reply time determined based on the first message and the second message, and a second reply time determined based on the first message and the third message to the second UWB device and the third UWB device.

According to an embodiment, the first reply time may be a time from when the first UWB device transmits the first message to when it receives the second message, and the second reply time may be a time from when the first UWB device transmits the first message to when it receives the third message.

According to an embodiment, the fourth message may further include identification information for the second UWB device and identification information for the third UWB device.

According to an embodiment, an indicator indicating group ranging may be included in a frame control field of each of the first message, the second message, the third message, and the fourth message.

According to an embodiment, an indicator indicating group ranging may be included in a payload information element (IE) within a control message type of each of the first message, the second message, the third message, and the fourth message.

The storage 1930 may store at least one of information transmitted and received through the transceiver 1910 and information generated through the controller 1920. For example, the storage unit 1930 may store information and data necessary for the method described above with reference to FIGS. 1 to 18.

FIG. 20 illustrates a structure of a second UWB device according to an embodiment of the disclosure.

The second UWB device of FIG. 20 is one of the UWB devices illustrated in FIGS. 1 to 18, and may be a receiving device within a ranging group.

Referring to FIG. 20, the second UWB device may include a transceiver 2010, a controller 2020, and a storage unit 2030. In the disclosure, the controller may be defined as a circuit or an application specific integrated circuit or at least one processor.

The transceiver 2010 may transmit and receive signals to and from other entities, and may also be referred to as a transmission/reception unit.

The controller 2020 may control the overall operation of the UWB device (or UE) according to an embodiment proposed in the disclosure and may also be referred to as a processor. For example, the controller 2020 may control signal flow between blocks to perform operations according to the flowchart described above.

The controller 2020 is configured to receive a first message (GRIM) for initiating group ranging from a first UWB device, control to transmit a second message (GRRM) responding to the first message to the first UWB device, and receive (overhear) a third message (GRRM) transmitted by a third UWB device to the first UWB device in response to the first message from the third UWB device.

The controller 2020 may receive a fourth message (GRFM) including a first reply time determined based on the first message and the second message, and a second reply time determined based on the first message and the third message from the first UWB device.

The storage unit 2030 may store at least one of information transmitted and received through the transceiver 2010 and information generated through the controller 2020. For example, the storage unit 2030 may store information and data necessary for the method described above with reference to FIGS. 1 to 12D.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method of a first ultra wide band (UWB) device, comprising:
transmitting a first message (GRIM) for initiating group ranging to a second UWB device and a third UWB device;
receiving a second message (GRRM) responding to the first message from the second UWB device;
receiving a third message (GRRM) responding to the first message from the third UWB device; and
transmitting a fourth message (GRFM) including a first reply time determined based on the first message and the second message, and a second reply time determined based on the first message and the third message to the second UWB device and the third UWB device.

2. The method of claim 1, wherein the first reply time is a time from when the first UWB device transmits the first message to when the first UWB device receives the second message, and wherein the second reply time is a time from when the first UWB device transmits the first message to when the first UWB device receives the third message.

3. The method of claim 1, wherein the fourth message further includes identification information for the second UWB device and identification information for the third UWB device.

4. The method of claim 1, wherein an indicator indicating group ranging is included in a frame control field of each of the first message, the second message, the third message, and the fourth message.

5. The method of claim 1, wherein an indicator indicating group ranging is included in a payload information element (IE) within a control message type of each of the first message, the second message, the third message, and the fourth message.

6. A method of a second ultra wide band (UWB) device, comprising:
receiving a first message (GRIM) for initiating group ranging from a first UWB device;
transmitting a second message (GRRM) responding to the first message to the first UWB device;
receiving (overhearing) a third message (GRRM) transmitted by a third UWB device to the first UWB device in response to the first message from the third UWB device; and
receiving a fourth message (GRFM) including a first reply time determined based on the first message and the second message, and a second reply time determined based on the first message and the third message from the first UWB device.

7. The method of claim 6, wherein the first reply time is a time from when the first UWB device transmits the first message to when the first UWB device receives the second message, and wherein the second reply time is a time from when the first UWB device transmits the first message to when the first UWB device receives the third message.

8. The method of claim 6, wherein the fourth message further includes identification information for the second UWB device and identification information for the third UWB device.

9. The method of claim 6, wherein an indicator indicating group ranging is included in a frame control field of each of the first message, the second message, the third message, and the fourth message.

10. The method of claim 6, wherein an indicator indicating group ranging is included in a payload information element (IE) within a control message type of each of the first message, the second message, the third message, and the fourth message.

11. A first ultra wide band (UWB) device, comprising:
a transceiver; and
a controller, wherein the controller is configured to:
control to transmit a first message (GRIM) for initiating group ranging to a second UWB device and a third UWB device;
receive a second message (GRRM) responding to the first message from the second UWB device;
receive a third message (GRRM) responding to the first message from the third UWB device; and
control to transmit a fourth message (GRFM) including a first reply time determined based on the first message and the second message, and a second reply time determined based on the first message and the third message to the second UWB device and the third UWB device.

12. The first UWB device of claim 11, wherein the first reply time is a time from when the first UWB device transmits the first message to when the first UWB device receives the second message, and wherein the second reply time is a time from when the first UWB device transmits the first message to when the first UWB device receives the third message.

13. The first UWB device of claim 11, wherein the fourth message further includes identification information for the second UWB device and identification information for the third UWB device.

14. A second ultra wide band (UWB) device, comprising:
a transceiver; and
a controller, wherein the controller is configured to:
receive a first message (GRIM) for initiating group ranging from a first UWB device;
control to transmit a second message (GRRM) responding to the first message to the first UWB device;
receive (overhear) a third message (GRRM) transmitted by a third UWB device to the first UWB device in response to the first message from the third UWB device; and
receive a fourth message (GRFM) including a first reply time determined based on the first message and the second message, and a second reply time determined based on the first message and the third message from the first UWB device.

15. The second UWB device of claim 14, wherein the first reply time is a time from when the first UWB device transmits the first message to when the first UWB device receives the second message, and wherein the second reply time is a time from when the first UWB device transmits the first message to when the first UWB device receives the third message.
